# FASCICULE DE BREVET EUROPEEN

(11) **EP 2 691 672 B1**
(45) Date de publication et mention de la délivrance du brevet: **20.07.2016**
(21) Numéro de dépôt: 12714802.1
(22) Date de dépôt: 16.03.2012
(51) Int. Cl.: F16H 47/04, B60K 6/12, F16H 37/08, F16H 47/02, F16H 3/093

(54) **VEHICULE COMPORTANT UNE CHAÎNE DE TRACTION HYBRIDE THERMIQUE/HYDRAULIQUE A REPARTITION DE PUISSANCE**
FAHRZEUG MIT EINEM HYBRIDVERBRENNUNGSMOTOR/HYDRAULISCHEN ANTRIEBSSTRANG MIT LEISTUNGSVERZWEIGUNG
VEHICLE COMPRISING A HYBRID COMBUSTION ENGINE/HYDRAULIC POWER TRAIN WITH POWER DISTRIBUTION

(30) Priorité: 29.03.2011 FR 1152576
(43) Date de publication de la demande: 05.02.2014
(73) Titulaire: Technoboost, 75116 Paris (FR)
(72) Inventeur: ROY, Franck, F-91700 Fleury Merogis (FR)
(74) Mandataire: Ménès, Catherine
(86) Numéro de dépôt international: PCT/FR2012/050560
(87) Numéro de publication internationale: WO 2012/131218

(56) Documents cités:
- EP-A1- 0 234 136
- EP-A1- 0 306 780
- EP-A2- 1 855 029
- DE-A1-102008 040 441
- FR-A1- 2 271 462
- FR-A5- 2 159 125
- US-A- 5 364 316
- US-A1- 2010 024 409

## Description

La présente invention est relative à une chaîne de traction pour véhicule hybride thermique/hydraulique et à un véhicule comportant une telle chaîne de traction.

Une chaîne de traction hybride thermique/hydraulique comporte un moteur thermique, un moteur hydraulique, un dispositif de production de pression hydraulique pour fournir de l'énergie hydraulique au moteur hydraulique et un dispositif de dérivation de puissance commandé pour adapter les régimes des moteurs thermique et hydraulique en fonction des diverses situations de vie auxquelles sont habituellement soumis les véhicules automobiles. Le document FR 2271 462 décrit un véhicule selon le préambule de la revendication 1.

Le document EP1993866 divulgue une chaîne de traction dans laquelle la pompe hydraulique et le moteur hydraulique sont reliés entre eux par l'intermédiaire d'une première liaison hydraulique et d'une deuxième liaison hydraulique. La pompe hydraulique et le moteur hydraulique, ainsi que les première et deuxième liaisons hydrauliques, forment un circuit hydraulique fermé. Une première branche de la chaîne de traction à répartition de puissance est constituée par le circuit hydraulique fermé. Pour stocker l'énergie cinétique pendant une phase de freinage (ou de décélération), un premier élément de stockage d'énergie de freinage peut être relié à la première liaison hydraulique ou en second lieu, à la deuxième liaison hydraulique. La pompe hydraulique et le moteur hydraulique sont connectés mécaniquement à l'arbre entraînant les roues motrices du véhicule.

Une telle chaîne de traction vise à optimiser la récupération de l'énergie au freinage.

La présente invention a notamment pour but d'optimiser les rendements des différentes sources d'énergie mises en oeuvre dans un véhicule hybride thermique/hydraulique en proposant une chaîne de traction compacte et aisément industrialisable, permettant d'adapter les régimes moteur et pompe dans leurs zones optimales de rendement en fonction des différentes situations de vie du véhicule en zone urbaine et extra urbaine.

La chaîne de traction hybride selon l'invention est par ailleurs particulièrement adaptée pour mettre en oeuvre un mode de fonctionnement impulsionnel du moteur thermique permettant de prolonger le mode de roulage en hydraulique pur tout en optimisant la consommation en carburant du véhicule.

A cet effet, l'invention a pour objet un véhicule selon la revendication 1.

Selon une caractéristique, le répartiteur de puissance comporte un train épicycloïdal comportant une couronne solidaire de l'arbre du moteur thermique, un porte-satellite solidaire de l'arbre primaire thermique et des satellites supportés à rotation par le porte-satellite, et un planétaire solidaire de l'arbre de pompe.

Selon une autre caractéristique, l'arbre primaire thermique est supporté à rotation par l'arbre de pompe, et en ce que l'arbre primaire thermique est arrêté en translation axiale sur l'arbre de pompe par un dispositif de blocage lié en rotation avec l'arbre de pompe.

Selon une autre caractéristique, l'arbre primaire thermique supporte en outre un synchroniseur de blocage apte à coopérer avec le dispositif de blocage pour solidariser l'arbre primaire thermique et l'arbre de pompe en rotation.

Selon une autre caractéristique, le dispositif de blocage comporte une couronne à crabots apte à coopérer avec les crabots du manchon synchroniseur de blocage dont le moyeu est lié en rotation à l'arbre primaire thermique.

Selon une autre caractéristique, le système de transmission mécanique d'origine hydraulique comporte deux engrenages définissant respectivement deux rapports de démultiplication hydraulique.

Selon une autre caractéristique, le système de transmission mécanique d'origine thermique comporte un engrenage définissant un rapport de démultiplication thermique.

Selon une autre caractéristique, le système de transmission mécanique d'origine hydraulique comporte un arbre secondaire hydraulique apte à être couplé à l'arbre primaire hydraulique suivant deux rapports de démultiplication définis respectivement par deux engrenages ; l'arbre secondaire hydraulique étant disposé entre l'axe passant par l'arbre primaire hydraulique et l'axe passant par l'arbre secondaire hydraulique.

Selon une autre caractéristique, le système de transmission mécanique d'origine thermique comporte un arbre secondaire thermique apte à être couplé à l'arbre primaire thermique suivant un rapport de démultiplication déterminé défini par un engrenage ; l'arbre secondaire thermique étant disposé entre l'axe passant par l'arbre primaire thermique et l'axe passant par l'arbre secondaire thermique.

Selon une autre caractéristique, l'arbre primaire hydraulique comprend deux arbres concentriques dont chacune des extrémités libres respectives est couplée mécaniquement à un des moteurs hydrauliques.

D'autres buts, caractéristiques et avantages de l'invention apparaîtront au cours de la description suivante de modes de réalisation, donnés à titre d'exemples non limitatifs, en regard des dessins joints.

Sur les dessins :

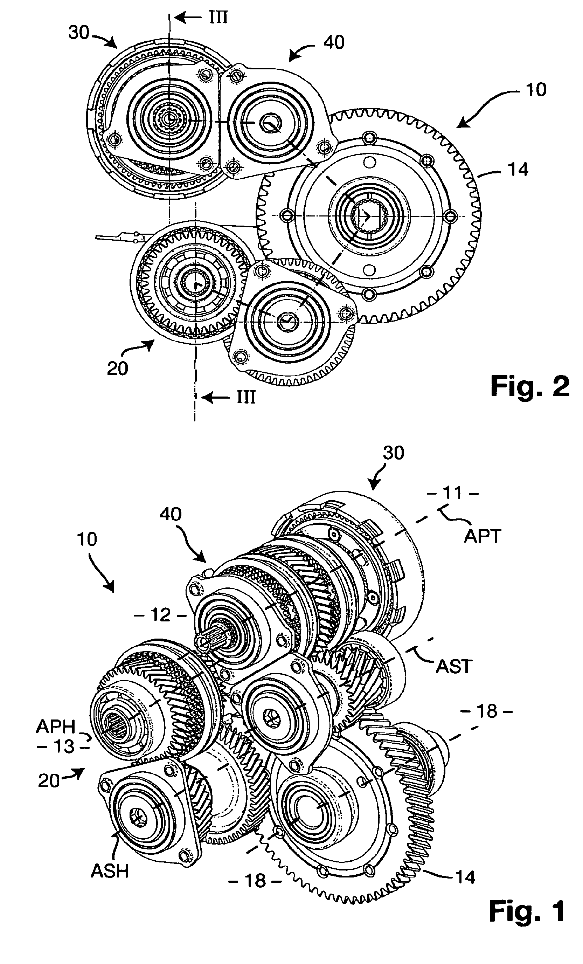

- la figure 1 est une vue en perspective d'un mode de réalisation d'une chaîne de traction hybride selon l'invention ;
- la figure 2 est une vue de face du mode de réalisation de la figure 1 ; et
- la figure 3 est une vue en coupe transversale suivant l'axe de coupe III-III de la figure 2.

Sur les différentes figures, les mêmes références désignent des éléments identiques ou similaires.

Dans la suite de la description, on désignera par pignon fixe, respectivement pignon fou, une roue dentée solidaire en rotation d'un arbre la supportant, et respectivement une roue dentée mobile en rotation autour de l'arbre la supportant. Un engrenage désignera un ensemble de deux pignons engrenant l'un avec l'autre ; un des deux pignons pouvant être fou.

Un pignon "arbré" désignera un pignon fixe usiné directement sur l'arbre.

Le fonctionnement d'un train épicycloïdal est supposé connu. Il ne sera donc pas décrit en détail dans la présente description.

Pour ne pas surcharger les figures, le moteur thermique, la pompe hydraulique, le moteur hydraulique et la réserve de pression hydraulique ne sont pas volontairement représentés.

En se reportant aux figures, la référence 10 désigne une chaîne de traction hybride thermique-hydraulique d'un véhicule hybride, partiellement représentée, comportant un moteur thermique 11, une pompe hydraulique 12 de production de pression hydraulique, à cylindrée variable, un moteur hydraulique 13 et deux systèmes de transmission mécanique 20 et 40 dédiés respectivement à une transmission de puissance mécanique, d'origine hydraulique ou thermique, aux roues motrices 18 appartenant à un train roulant de véhicule, via un différentiel 14 relié à des arbres de transmission 16 du train.

Le différentiel 14 constitue des sorties S1 et S2 de la chaîne de traction hybride 10 transmettant une puissance mécanique d'origine thermique, hydraulique ou mixte, aux roues motrices 18 du véhicule selon des rapports de démultiplication déterminés entre des entrées E1, E2 et E3 et les sorties S1 et S2 de la chaîne de traction hybride 10.

L'entrée E1 correspond à la sortie du moteur hydraulique 13, l'entrée E2 correspond à la sortie du moteur thermique 11, et l'entrée E3 correspond à la sortie de la pompe hydraulique 13.

La pompe hydraulique 12 fait partie d'un système de production de pression hydraulique qui comporte un réservoir d'alimentation de type connu non représenté. Le réservoir d'alimentation est relié, de manière connue en soi, d'une part à la pompe hydraulique 12 par des premières conduites et, d'autre part au moteur hydraulique 13 par des deuxièmes conduites non représentées. Le réservoir d'alimentation peut comporter de manière connue en soi, un accumulateur basse pression et un accumulateur haute pression qui sont reliés à des moyens de commande de type connu (non représentés) pour délivrer de l'énergie hydraulique au moteur hydraulique 13 tout en gérant les réserves de pression.

Le système de transmission mécanique d'origine hydraulique 20 est interposée entre le moteur hydraulique 13 et le différentiel 14. Il est apte à autoriser un couplage ou un découplage du moteur hydraulique 13 selon deux rapports de démultiplication déterminés R1 et R2, appelés également rapports hydrauliques.

Il comporte un premier engrenage 21 définissant un premier rapport hydraulique déterminé R1 et un deuxième engrenage 22 définissant un deuxième rapport hydraulique déterminé R2.

L'engrenage 21 du premier rapport hydraulique R1 comporte un pignon fou 21B monté libre à rotation par rapport à l'arbre 13A du moteur hydraulique 13, appelé également arbre primaire hydraulique, et un pignon fixe 21A par rapport à un arbre 23, appelé également arbre secondaire hydraulique.

L'arbre primaire hydraulique 13A s'étend selon un axe APH et l'arbre secondaire hydraulique 23 s'étend selon un axe ASH, parallèle à l'axe APH.

L'engrenage 22 de second rapport hydraulique R2 comporte un pignon fou 22B qui est monté libre à rotation par rapport à l'arbre primaire hydraulique 13A et un pignon fixe 22A par rapport l'arbre secondaire hydraulique 23.

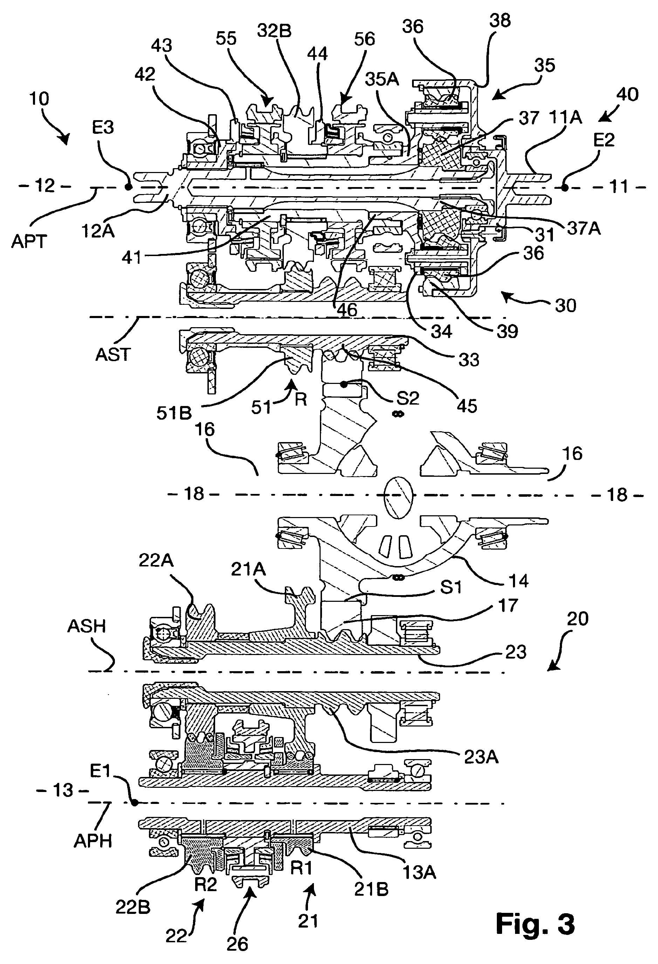

Un dispositif d'accouplement constitué par un synchroniseur double à cône de friction, référencé 26 sur la figure 3, permet de coupler ou de découpler les pignons fous 21B, 22B, de l'arbre 13A du moteur hydraulique 13 et de sélectionner soit le premier rapport R1 soit le deuxième rapport R2 de démultiplication de la chaîne de traction hydraulique 20.

Un pignon arbré 23A de l'arbre secondaire hydraulique 23 constitue la sortie mécanique S1 de la chaîne de traction hybride 10. Le pignon arbré 23A est en prise avec la couronne externe 17 du différentiel 14 pour entraîner les arbres de transmission 16 quand l'un des deux rapports hydrauliques R1 ou R2 est engagé.

Le synchroniseur double 26 est de type connu et il est commandé par un moyen de commande de type également connu non représenté.

Le système de transmission mécanique d'origine thermique 40 est interposé entre le moteur thermique 11, la pompe 12 et le différentiel 14.

Il comporte, du côté de l'entrée E2, un dispositif de répartition de puissance mécanique 30 disposé en sortie du moteur thermique 11.

Le dispositif de répartition de puissance 30 est dédié, d'une part, à la fourniture de puissance mécanique à la pompe hydraulique 12 et, d'autre part, aux roues 18 du véhicule.

Il est constitué d'un train épicycloïdal 35 comprenant une couronne planétaire, ou couronne 39, un pignon planétaire, ou planétaire 37, d'un porte-satellite 35A, supportant à rotation libre des satellites 36 (trois ou quatre par exemple) disposés entre la couronne 39 et le planétaire 37.

La couronne 39 est solidaire à rotation d'un arbre 11A qui est couplé à l'arbre de sortie du moteur thermique 11 correspondant généralement au vilebrequin. L'arbre 11A sera désigné par arbre du moteur thermique.

Le planétaire 37 est solidaire d'un arbre 12A qui est couplé à l'arbre de sortie de la pompe 12. L'arbre 12A sera désigné par arbre de pompe.

L'arbre du moteur 11A, l'arbre primaire thermique 11 et l'arbre de pompe 12A sont coaxiaux, de même axe APT.

Chaque satellite 36 comporte une roue dentée engrenée d'une part avec le planétaire 37, relié à la pompe hydraulique 12 et, d'autre part, à la couronne 39.

Avantageusement, le train planétaire 35 comprend un boîtier ouvert 38, solidaire de l'arbre du moteur thermique 11A. Le boîtier 38 définit une cuvette de forme générale cylindrique, montée à rotation à l'extrémité de l'arbre de pompe 12A, en étant centré sur l'arbre 12A ; les arbres moteur 11A et de pompe 12A étant coaxiaux.

Le fond du boîtier 38 comporte une cage 31 coopérant avec un premier pallier (par exemple un roulement à billes) supporté par l'arbre de pompe 12A ; la cage 31 étant centrée sur la bague externe du roulement.

La paroi latérale interne du boîtier 38 est pourvue sur toute sa circonférence d'une denture définissant la couronne 39 du train épicycloïdal 35.

Le porte-satellite 35A définit une plaque 34 supportant les axes de rotation des satellites 36 et forme un couvercle pour le boîtier 38 du train épicycloïdal 35.

L'ensemble, formé par le boîtier 38, la couronne 39, et les satellites 36, est maintenu en translation sur la première extrémité de l'arbre de pompe 12A (côté entrée E2) par le porte-satellite 35A, venant en butée axiale contre le planétaire 37 ; ce dernier étant "pris en sandwich" entre le porte-satellite 35A et le premier pallier.

Le porte-satellite 35A comporte une partie droite cylindrique formant un moyeu 46 s'étendant à partir de la plaque 34, en étant centré sur l'arbre de pompe 12A à l'extrémité libre duquel est fixé le planétaire 37.

Le moyeu 46 est emmanchée à l'intérieur d'une première extrémité d'un arbre creux 41, appelé arbre primaire thermique. La première extrémité de l'arbre primaire thermique 41, contenant le moyeu 46, reçoit un deuxième palier, ici la bague intérieure d'un roulement à bille.

Le porte-satellite 35A et l'arbre primaire thermique 41 sont aptes à tourner à l'intérieur d'un carter d'une boîte de vitesses (non représentée) recevant la bague externe du roulement.

La deuxième extrémité de l'arbre primaire 41 (côté de l'entrée E3) est montée à rotation autour de l'arbre de pompe 12A via un troisième palier, par exemple un roulement à aiguilles.

Cette deuxième extrémité de l'arbre primaire thermique 41 est arrêtée en translation axiale par un dispositif de blocage 42 claveté sur l'extrémité de l'arbre de pompe 12A lui-même bloqué en translation axiale sur l'arbre de pompe 12A.

Le dispositif de blocage 42 comporte une partie de plus grand diamètre supportant une couronne à crabots 43.

Cette couronne à crabots 43 est apte à coopérer avec les crabots du manchon d'un premier synchroniseur simple à friction 55, dit de blocage, dont le moyeu est monté fixe sur la deuxième extrémité de l'arbre primaire thermique 41.

La couronne à crabots 43 comporte en outre un anneau de synchronisation, solidaire de la couronne à crabots 43, qui pénètre à l'intérieur d'une cavité formée dans la face latérale du moyeu de synchronisation, en étant centrée atour du moyeu de synchronisation. L'anneau de synchronisation supporte à rotation, une bague de synchronisation, et un ou des cônes de synchronisation, interposés entre la bague et l'anneau de synchronisation.

De manière connue en soi, un déplacement axial du manchon en direction de la couronne à crabots 43 (vers la gauche en se référant à la figure 3) entraîne, après égalisation des vitesses respectives des arbres primaire thermique 41 et de pompe 12A, la solidarisation en rotation des deux arbres 41 et 12A.

Le dispositif de blocage 42 assure, en plus de la fonction de butée axiale, la solidarisation en rotation des arbres de pompe 12A et primaire thermique 41 quand le synchroniseur de blocage 55 est activé.

L'arbre primaire thermique 41 supporte en outre un pignon fou 32B, monté libre à rotation par rapport à l'arbre primaire thermique 41, et appartenant à un engrenage 51.

Un deuxième synchroniseur simple à friction, référencé 56, de même technologie que le premier 55, permet de coupler ou de découpler le pignon fou 32B par rapport à l'arbre primaire thermique 41.

Le pignon fou 32B comporte une couronne à crabots 44 qui coopèrent avec les crabots du manchon du deuxième synchroniseur 56.

L'engrenage 51 comporte un pignon fixe 51b supporté par un arbre 33 dit arbre secondaire thermique.

Cet arbre secondaire thermique 33 assure la transmission mécanique entre le moteur thermique 11, avec ou sans la pompe hydraulique 12, et les roues 18 du véhicule via le différentiel 14 quand le deuxième synchroniseur 56 est activé.

L'activation du deuxième synchroniseur 56 permet de solidariser le pignon fou 32B sur l'arbre primaire thermique 41 et quand les vitesses respectives des arbres primaire 41 et secondaire 33 thermiques sont égalisées, l'arbre secondaire thermique 33 est entraîné via le pignon fixe 51B selon un seul rapport de démultiplication thermique R défini par l'engrenage 51.

L'arbre secondaire thermique 33 est pourvu d'un pignon arbré 45 engrenant avec la couronne 17 du différentiel 14.

L'arbre primaire thermique 35A s'étend selon un axe APT et l'arbre secondaire thermique 33 s'étend selon un axe AST, parallèle à l'axe APT.

Les arbres secondaires, hydraulique 23 et thermique 33, sont fixés respectivement à rotation par rapport au carter de la boîte de vitesses de manière connue en soi par des paliers à roulements, roulement à billes ou autre.

Les différents arbres primaires, secondaires, thermiques ou hydrauliques s'étendent tous suivant des axes parallèles entre eux et avec l'axe du différentiel qui correspond également à l'axe des roues.

On comprend qu'avec un mode de réalisation tel que décrit ci-dessus en référence aux figures, les roues motrices 18 peuvent être entraînées par de l'énergie thermique, de l'énergie hydraulique ou une combinaison de ces deux énergies.

La chaîne de traction hybride 10 selon l'invention permet un fonctionnement optimal en autorisant plusieurs modes de fonctionnement qui sont décrits ci-après suivant les différentes situations de vies auxquelles le véhicule peut être confronté.

La chaîne de traction hybride présente un encombrement axial minimal. Elle est donc compacte et peu s'intégrer dans un espace réduit.

Selon un premier mode de fonctionnement, dans lequel la pression dans le réservoir d'alimentation est suffisante pour l'entraînement des roues motrices 18, le décollage du véhicule est assuré par le moteur hydraulique 13 seul.

Dans ce premier mode de fonctionnement, seul Le système de transmission mécanique d'origine hydraulique 20 est sollicité pour mouvoir le véhicule. Le moteur thermique 11 est à l'arrêt, tout comme la pompe hydraulique 12.

Les premier et deuxième synchroniseurs 55 et 56 du système de transmission mécanique d'origine thermique 40 sont au repos (leurs manchons respectifs sont à leur état point mort).

Le système de transmission mécanique d'origine hydraulique 20 comporte deux rapports de démultiplication hydrauliques R1 et R2, qui sont sélectionnés en actionnant respectivement le synchroniseur double 26 vers la droite ou vers la gauche en se référant à la figure 3.

Le premier rapport hydraulique R1, correspondant au plus grand rapport de démultiplication (ou rapport court), est utilisé de préférence pour faire décoller le véhicule.

Le moteur hydraulique 13 transforme la pression hydraulique stockée dans le réservoir, en couple transmis à l'arbre secondaire hydraulique 23 par l'intermédiaire de l'engrenage 21 de premier rapport hydraulique R1 quand ce dernier est sélectionné. L'arbre secondaire hydraulique 23 transmet de la puissance au différentiel 14 via le pignon arbré 23A et la couronne 17 du différentiel 14. Cette puissance arrive jusqu'aux roues motrices 18 par l'intermédiaire des arbres de transmission 16.

Dans un deuxième de fonctionnement, où la pression du réservoir d'alimentation est insuffisante pour assurer l'entraînement des roues motrices 18 par l'intermédiaire du moteur hydraulique 13, on démarre le moteur thermique 11 et on choisit de le faire fonctionner avantageusement en mode impulsionnel de manière à réduire au maximum la consommation en carburant. La pompe hydraulique 12 est alors entraînée par le moteur thermique 11 pour charger le réservoir d'alimentation 19 afin que ce dernier puisse fournir suffisamment d'énergie au moteur hydraulique 13.

Dans ce deuxième mode de fonctionnement, on bloque le train épicycloïdal 35 en déplaçant le manchon du synchroniseur de blocage 55 vers la gauche en se référant à la figure 3. Ce qui permet de solidariser l'arbre primaire thermique 41 avec l'arbre de pompe 12A.

Le porte-satellite 35A et le planétaire 37 tournent alors à la même vitesse.

Le deuxième synchroniseur 56 reste au repos: le pignon fou 32B n'entraîne donc pas l'arbre secondaire thermique 33 et n'entraîne donc pas les roues 18.

Le moteur thermique 11 fournit, par l'arbre 11A, un couple à la couronne 39 du train épicycloïdal 35 qui entraîne le planétaire 37 en rotation via les satellites 36. Dans ce deuxième mode de fonctionnement, le train épicycloïdal 35, ainsi bloqué, se comporte comme un simple arbre de mécanique transmettant la puissance mécanique du moteur thermique 11 à la pompe 12.

Dans ce deuxième mode de fonctionnement, du couple continue à être transmis par le moteur hydraulique 13 vers les roues motrices 18 car le premier rapport hydraulique R1 (ou le deuxième R2) reste engagé, comme dans la situation de fonctionnement décrite en relation avec le premier mode de fonctionnement. Le moteur thermique 11 fonctionnant en mode impulsionnel, permet à la pompe hydraulique d'alimenter en énergie hydraulique le réservoir de d'alimentation 19 afin d'assurer une traction en mode hydraulique.

Dans un troisième mode de fonctionnement, le train épicycloïdal 35 étant toujours bloqué, on désactive Le système de transmission mécanique d'origine hydraulique 20 en mettant le synchroniseur double 26 au repos ; les pignons fous 21B et 22B tournant alors librement autour de l'arbre primaire hydraulique 13A.

On active le système de transmission mécanique d'origine thermique 40 en actionnant le deuxième synchroniseur 56 par un déplacement du manchon vers la gauche en se référant à la figure 3.

L'engrenage 51 devient alors actif et entraîne en rotation l'arbre secondaire thermique 33 qui entraîne les roues 18 du véhicule par l'intermédiaire du pignon arbré 45 et la couronne 17 du différentiel 14.

Les régimes des arbres primaire thermique 41, de pompe 37A, 12A et du moteur thermique 11A sont identiques.

Le seul rapport de démultiplication thermique R est défini par l'engrenage 51, avec un couple résistif supplémentaire apporté par la pompe 12. Cette configuration définit un rapport long.

Dans un quatrième mode de fonctionnement, on bloque la pompe 12 en rotation en la plaçant à sa cylindrée maximale.

Le blocage de la pompe 12 ne fait intervenir que des moyens hydrauliques. On choisit de piloter la cylindrée de la pompe en position maximum venant ainsi contrer le couple de l'arbre 12A.

Le système de transmission mécanique d'origine hydraulique 20 est inactif : le synchroniseur double 26 est dans sa position de repos.

Le premier synchroniseur 55 du système de transmission mécanique d'origine thermique 40 est au repos.

Dans cette configuration, l'arbre primaire thermique 41 n'est plus lié en rotation avec la pompe 12.

L'arbre de pompe 12A étant bloqué en rotation, le planétaire 37 du train épicycloïdal 35 ne tourne pas.

L'arbre 11A entraîne alors l'arbre primaire thermique 41 avec un rapport de réduction défini par la couronne 39 du train 35 et les satellites 36.

Le deuxième synchroniseur 56 est activé en déplaçant le manchon vers la gauche, en se référant à la figure 3, de manière à transmettre la puissance mécanique à l'arbre secondaire thermique 33.

Dans un cinquième mode de fonctionnement, dit de dérivation de puissance, les trois éléments 35A, 36 et 39 du train épicycloïdal 35 sont en rotation.

Le synchroniseur de blocage 55 est au repos (inactif). L'arbre de pompe 12A, 37A et l'arbre primaire thermique 41 sont désolidarisés : ils peuvent donc tourner à des régimes différents.

A vitesse véhicule nulle, le moteur thermique 11 peut être à son régime maximal. Dans ce cas, la pompe 12 est au même régime que le moteur thermique 11.

Au fur et à mesure que le véhicule accélère, l'arbre primaire thermique 41 monte en régime et la pompe 12 chute en régime.

Dans un sixième mode de fonctionnement, la chaîne de traction hybride 10 est en situation correspondant au démarrage en côte d'un véhicule par les roues motrices 18, nécessitant la combinaison des puissances hydraulique et thermique.

Dans ce mode de fonctionnement, la pompe hydraulique 12 est entraînée par le moteur thermique 11 pour charger le réservoir d'alimentation afin que ce dernier puisse fournir suffisamment d'énergie au moteur hydraulique 13 qui transmet du couple vers les roues motrices 18 car le premier rapport hydraulique R1 est engagé (comme dans le premier mode de fonctionnement).

Le moteur thermique 11 est également dans un mode de fonctionnement où le système de transmission mécanique d'origine thermique vient en complément de l'entraînement effectué par le système de transmission mécanique d'origine hydraulique 20.

En effet, suivant la résistance appliquée au train épicycloïdal 35 par la pompe hydraulique 12 ou le système de transmission mécanique d'origine thermique 40, le train épicycloïdal 35 sert de répartiteur de couple entre le moteur thermique 11 et la pompe 12 ou le système de transmission mécanique d'origine thermique 40. Cette répartition de couple est induite par l'effet de frein provoqué par la pompe 12 ou par le système de transmission mécanique d'origine thermique 40.

Dans ce mode de fonctionnement, la chaîne de traction hybride 10 selon l'invention permet de bénéficier tant de la puissance du moteur hydraulique 13 que de la puissance du moteur thermique 11. Simultanément, la pompe hydraulique 12 continue à recharger le réservoir d'alimentation hydraulique pour compenser la consommation hydraulique du moteur hydraulique 13.

Dans un septième mode de fonctionnement, la chaîne de traction hybride 10 est dans une situation correspondant au roulage d'un véhicule au freinage ou en décélération, avec une restitution de l'énergie cinétique du véhicule. Cette restitution d'énergie permet de recharger le réservoir d'alimentation hydraulique.

Dans ce mode de fonctionnement, le couple d'énergie cinétique circule à partir des roues motrices 18 vers le moteur hydraulique 13, via le système de transmission mécanique d'origine hydraulique 20 avec l'un des deux rapports de démultiplication hydraulique engagé R1 ou R2.

Le moteur hydraulique 13 fonctionne ici comme une pompe et restitue l'énergie cinétique du véhicule au freinage ou en décélération, en transformant le couple d'énergie cinétique en pression hydraulique qui est stockée dans le réservoir de pression.

Dans un mode de fonctionnement correspondant à un décollage d'un véhicule en marche arrière, le principe de fonctionnement reste conforme à celui du premier mode de fonctionnement en inversant le sens de rotation du moteur hydraulique 13 avec un deux rapports hydraulique R1 ou R2 engagé, de préférence le premier rapport R1. Le moteur thermique 11 ne fournit pas d'énergie au système de transmission mécanique d'origine thermique 40 ; le deuxième synchroniseur 56 étant au repos et ne transmettant pas de couple.

Avantageusement, la chaîne de traction hybride 10 permet, dans un véhicule automobile hybride hydraulique /thermique, d'améliorer globalement la consommation d'énergie, notamment lorsque le véhicule doit rouler à vitesse élevée.

Avantageusement, la chaîne de traction hybride 10 présente une architecture qui comporte deux rapports hydrauliques R1 et R2 et un rapport thermique R combinés au répartiteur de puissance mécanique 30 constitué au principal par le train épicycloïdal 35, ce qui permet une grande combinaison de démultiplications et de modes de fonctionnements hydrauliques et/ou thermiques.

Avec cette grande diversité de démultiplications, il est possible d'optimiser le rendement global de la chaîne de traction du véhicule hybride hydraulique/thermique. Il est ainsi possible d'optimiser les émissions de dioxyde de carbone, en particulier pour un fonctionnement correspondant à une vitesse élevée du véhicule. Avantageusement la restitution d'énergie cinétique au freinage ou en décélération, augmente aussi le rendement global de la chaîne de traction hybride.

Selon l'invention, la source d'énergie hydraulique comporte deux moteurs hydrauliques, de cylindrée déterminée, identique ou différente, disposés respectivement de part et d'autre de l'arbre primaire hydraulique.

Selon l'invention, chacune des extrémités de l'arbre primaire hydraulique est couplé à un moteur hydraulique de puissance déterminée.

A titre de variante, l'arbre primaire hydraulique est constitué de deux arbres concentriques solidaires entre eux, et dont chacune des extrémités libres respectives est couplée à un des deux moteurs hydrauliques.

Enfin, la pompe 12 peut être avantageusement utilisée pour démarrer le moteur thermique 11 en inversant le sens de rotation de la pompe 12.

La présente invention n'est pas limitée aux seuls modes de réalisation qui viennent d'être décrits.

Ainsi, le nombre de rapports de démultiplication aussi bien thermiques qu'hydrauliques peut être adapté en fonction du typage du véhicule.

## Revendications

1. Véhicule, notamment automobile, comportant une chaîne de traction hybride thermique/hydraulique (10) comportant un moteur thermique (11), au moins un moteur hydraulique (13), une pompe hydraulique (12), apte à fournir de la pression hydraulique au moteur hydraulique, un système de transmission mécanique d'origine hydraulique (20) et un système de transmission mécanique d'origine thermique (40), aptes à transmettre une puissance mécanique d'origine thermique, hydraulique ou mixte, aux roues motrices (18) du véhicule selon des rapports de démultiplication déterminés,
le système de transmission mécanique d'origine hydraulique (20) comportant :
- un arbre primaire hydraulique (13A) couplé au moteur hydraulique apte à transmettre la puissance mécanique d'origine hydraulique aux roues motrices du véhicule suivant au moins un rapport de démultiplication déterminé ;
le système de transmission mécanique d'origine thermique comportant :
- un arbre de pompe (12A) couplé à la pompe ;
- un arbre de moteur thermique (11A) couplé au moteur thermique ;
- un arbre primaire thermique (35A), distinct de l'arbre de moteur thermique, couplé à l'arbre du moteur thermique et apte à transmettre la puissance mécanique d'origine thermique aux roues motrices du véhicule suivant au moins un rapport de démultiplication déterminé, l'arbre primaire thermique étant apte à être couplé à l'arbre de pompe (12A);
- un répartiteur de puissance (30) couplé entre l'arbre du moteur thermique, l'arbre primaire thermique et l'arbre de pompe ; l'arbre du moteur thermique, l'arbre primaire thermique et l'arbre de pompe étant coaxiaux
le véhicule étant **caractérisé en ce que** la chaîne de traction hybride comporte deux moteurs hydrauliques de puissance déterminée, chacune des extrémités de l'arbre primaire hydraulique étant couplé à respectivement l'un des deux moteurs respectivement l'hydrauliques.

2. Véhicule selon la revendication précédente, **caractérisé en ce que** le répartiteur de puissance comporte un train épicycloïdal (35) comportant une couronne (39) solidaire de l'arbre du moteur thermique, un porte-satellite (35A) solidaire de l'arbre primaire thermique et des satellites (36) supportés à rotation par le porte-satellite, et un planétaire (39) solidaire de l'arbre de pompe.

3. Véhicule selon l'une des revendications précédentes, **caractérisé en ce que** l'arbre primaire thermique est supporté à rotation par l'arbre de pompe, et **en ce que** l'arbre primaire thermique est arrêté en translation axiale sur l'arbre de pompe par un dispositif de blocage (42) lié en rotation avec l'arbre de pompe.

4. Véhicule selon la revendication précédente, **caractérisé en ce que** l'arbre primaire thermique supporte en outre un synchroniseur de blocage (55) apte à coopérer avec le dispositif de blocage pour solidariser l'arbre primaire thermique et l'arbre de pompe en rotation.

5. Véhicule selon la revendication 4, **caractérisé en ce que** le dispositif de blocage comporte une couronne à crabots (43) apte à coopérer avec les crabots du manchon synchroniseur de blocage dont le moyeu est lié en rotation à l'arbre primaire thermique.

6. Véhicule selon l'une des revendications précédentes, **caractérisé en ce que** le système de transmission mécanique d'origine hydraulique comporte deux engrenages (21 et 22) définissant respectivement deux rapports de démultiplication hydraulique (R1 et R2).

7. Véhicule selon l'une des revendications précédentes, **caractérisé en ce que** le système de transmission mécanique d'origine thermique comporte un engrenage (51) définissant un rapport de démultiplication thermique (R).

8. Véhicule selon l'une des revendications précédentes, **caractérisé en ce que** le système de transmission mécanique d'origine hydraulique comporte un arbre secondaire hydraulique (23) apte à être couplé à l'arbre primaire hydraulique suivant deux rapports de démultiplication (R1 et R2) définis respectivement par deux engrenages (21, 22) ; l'arbre secondaire hydraulique étant disposé entre l'axe (APH) passant par l'arbre primaire hydraulique et l'axe (ASH) passant par l'arbre secondaire hydraulique.

9. Véhicule selon l'une des revendications précédentes, **caractérisé en ce que** le système de transmission mécanique d'origine thermique comporte un arbre secondaire thermique (33) apte à être couplé à l'arbre primaire thermique suivant un rapport de démultiplication déterminé (R) défini par un engrenage (51) ; l'arbre secondaire thermique étant disposé entre l'axe (APT) passant par l'arbre primaire thermique et l'axe (AST) passant par l'arbre secondaire thermique.

10. Véhicule selon l'une des revendications précédentes, **caractérisé en ce que** l'arbre primaire hydraulique comprend deux arbres concentriques dont chacune des extrémités libres respectives est couplée mécaniquement à un des moteurs hydrauliques.

## Patentansprüche

1. Fahrzeug, insbesondere Kraftfahrzeug, das einen hybriden thermischen/hydraulischen Antriebsstrang (10) umfasst, der einen Verbrennungsmotor (11), mindestens einen Hydraulikmotor (13), eine Hydraulikpumpe (12), die geeignet ist, um den Hydraulikdruck zu dem Hydraulikmotor zu liefern, ein mechanisches Übertragungssystem hydraulischen Ursprungs (20) und ein mechanisches Übertragungssystem thermischen Ursprungs (40) umfasst, die geeignet sind, eine mechanische Leistung thermischen, hydraulischen oder gemischten Ursprungs zu den Antriebsrädern (18) des Fahrzeugs gemäß bestimmten Untersetzungsverhältnissen zu übertragen,
wobei das mechanische Übertragungssystem hydraulischen Ursprungs (20) Folgendes umfasst:
- eine hydraulische Primärwelle (13A), die mit dem Hydraulikmotor gekuppelt ist, die geeignet ist, um die mechanische Leistung hydraulischen Ursprungs auf die Antriebsräder des Fahrzeugs gemäß mindestens einem bestimmten Untersetzungsverhältnis zu übertragen,
wobei das mechanische Übertragungssystem thermischen Ursprungs Folgendes umfasst:
- eine Pumpenwelle (12A), die mit der Pumpe gekuppelt ist,
- eine Verbrennungsmotorwelle (11A), die mit dem Verbrennungsmotor gekuppelt ist,
- eine thermische Primärwelle (35A), die von der Verbrennungsmotorwelle unterschiedlich ist, die mit der Welle des Verbrennungsmotors gekuppelt und geeignet ist, um die mechanische Leistung thermischen Ursprungs auf die Antriebsräder des Fahrzeugs gemäß mindestens einem bestimmten Untersetzungsverhältnis zu übertragen, wobei die thermische Primärwelle geeignet ist, mit der Pumpenwelle (12A) gekuppelt zu werden,
- einen Leistungsverteiler (30), der zwischen der Welle des Verbrennungsmotors, der thermischen Primärwelle und der Pumpenwelle gekuppelt ist, wobei die Welle des Verbrennungsmotors, die thermische Primärwelle und die Pumpenwelle koaxial sind,
Fahrzeug **dadurch gekennzeichnet, dass** der hybride Antriebsstrang zwei Hydraulikmotoren mit bestimmter Leistung umfasst, wobei jedes der Enden der hydraulischen Primärwelle jeweils mit einem der zwei Hydraulikmotoren gekuppelt ist.

2. Fahrzeug gemäß dem vorhergehenden Anspruch, **dadurch gekennzeichnet, dass** der Leistungsverteiler ein Umlaufgetriebe (35) umfasst, das einen Kranz (39) umfasst, der mit der Welle des Verbrennungsmotors fest verbunden ist, einen Satellitenträger (35A), der mit der thermischen Primärwelle fest verbunden ist, und Satellitenräder (36), die unter Drehung von dem Satellitenträger getragen werden, und ein Planetenrad (39), das fest mit der Pumpenwelle verbunden ist.

3. Fahrzeug nach einem der vorhergehenden Ansprüche, **dadurch gekennzeichnet, dass** die thermische Primärwelle unter Drehung von der Pumpenwelle getragen wird, und dass die thermische Primärwelle in axialer Verschiebung auf der Pumpenwelle von einer Blockierungsvorrichtung (42), die unter Drehung mit der Pumpenwelle verbunden ist, gestoppt wird.

4. Fahrzeug nach dem vorhergehenden Anspruch, **dadurch gekennzeichnet, dass** die thermische Primärwelle außerdem eine Blockierungs-Synchronisierungseinrichtung (55) trägt, die geeignet ist, um mit der Blockierungsvorrichtung zusammenzuwirken, um die thermische Primärwelle fest mit der Pumpenwelle unter Drehung zu verbinden.

5. Fahrzeug nach Anspruch 4, **dadurch gekennzeichnet, dass** die Blockierungsvorrichtung einen Klauenring (43) umfasst, der geeignet ist, um mit den Klauen der Hülse der Blockierungs-Synchronisierungseinrichtung zusammenzuwirken, deren Nabe in Drehung mit der thermischen Primärwelle verbunden ist.

6. Fahrzeug nach einem der vorhergehenden Ansprüche, **dadurch gekennzeichnet, dass** das mechanische Übertragungssystem hydraulischen Ursprungs zwei Radgetriebe (21 und 22) umfasst, die jeweils zwei hydraulische Untersetzungsverhältnisse (R1 und R2) definieren.

7. Fahrzeug nach einem der vorhergehenden Ansprüche, **dadurch gekennzeichnet, dass** das mechanische Übertragungssystem thermischen Ursprungs ein Radgetriebe (51) umfasst, das ein thermisches Untersetzungsverhältnis (R) definiert.

8. Fahrzeug nach einem der vorhergehenden Ansprüche, **dadurch gekennzeichnet, dass** das mechanische Übertragungssystem hydraulischen Ursprungs eine hydraulische Sekundärwelle (23) umfasst, die geeignet ist, um mit der hydraulischen Primärwelle gemäß zwei Untersetzungsverhältnisse (R1 und R2), die jeweils von zwei Radgetrieben (21, 22) definiert sind, gekuppelt zu sein, wobei die hydraulische Sekundärwelle zwischen der Achse (APH), die durch die hydraulische Primärwelle verläuft, und der Achse (ASH), die durch die hydraulische Sekundärwelle verläuft, angeordnet ist.

9. Fahrzeug nach einem der vorhergehenden Ansprüche, **dadurch gekennzeichnet, dass** das mechanische Übertragungssystem thermischen Ursprungs eine thermische Sekundärwelle (33) umfasst, die geeignet ist, mit der thermischen Primärwelle gemäß einem bestimmten Untersetzungsverhältnis (R), das von einem Radgetriebe (51) definiert ist, gekuppelt zu sein, wobei die thermische Sekundärwelle zwischen der Achse (APT), die durch die thermische Primärwelle verläuft, und der Achse (AST), die durch die thermische Sekundärwelle verläuft, angeordnet ist.

10. Fahrzeug nach einem der vorhergehenden Ansprüche, **dadurch gekennzeichnet, dass** die hydraulische Primärwelle zwei konzentrische Wellen umfasst, von welchen jedes der jeweiligen freien Enden mechanisch mit einem der Hydraulikmotoren gekuppelt ist.

## Claims

1. Vehicle, in particular automotive vehicle, comprising a hybrid combustion engine/hydraulic power train (10) comprising a combustion engine (11), at least one hydraulic motor (13), a hydraulic pump (12) which is able to supply hydraulic pressure to the hydraulic motor, a mechanical transmission system of hydraulic origin (20) and a mechanical transmission system of thermal origin (40) capable of transmitting a mechanical power of thermal, hydraulic or mixed origin to the drive wheels (18) of the vehicle according to specific gear ratios,
the mechanical transmission system of hydraulic origin (20) comprising:
- a primary hydraulic shaft (13A) coupled to the hydraulic motor, capable of transmitting the mechanical power of hydraulic origin to the drive wheels of the vehicle according to at least one specific gear ratio;
the mechanical transmission system of thermal origin comprising:
- a pump shaft (12A) coupled to the pump;
- a combustion engine shaft (11A) coupled to the combustion engine;
- a primary combustion power shaft (35A) separate from the combustion engine shaft, coupled to the shaft of the combustion engine and capable of transmitting the mechanical power of thermal origin to the drive wheels of the vehicle according to at least one specific gear ratio, the primary combustion power shaft being capable of being coupled to the pump shaft (12A);
- a power distributor (30) coupled between the shaft of the combustion engine, the primary combustion power shaft and the pump shaft; the shaft of the combustion engine, the primary combustion power shaft and the pump shaft being coaxial,
the vehicle being **characterised in that** the hybrid power train comprises two hydraulic motors of specific power, each of the ends of the primary hydraulic shaft being respectively coupled to one of the two hydraulic motors.

2. Vehicle according to the preceding claim, **characterised in that** the power distributor comprises an epicyclic gear train (35) comprising a ring gear (39) fixed to the shaft of the combustion engine, a planetary wheel carrier (35A) fixed to the primary combustion power shaft and planetary wheels (36) supported in rotation by the planetary wheel carrier and a planetary gear (39) fixed to the pump shaft.

3. Vehicle according to one of the preceding claims, **characterised in that** the primary combustion power shaft is supported in rotation by the pump shaft, and **in that** the primary combustion power shaft is stopped in axial translation on the pump shaft by a blocking device (42) connected in rotation to the pump shaft.

4. Vehicle according to the preceding claim, **characterised in that** the primary combustion power shaft further supports a blocking synchroniser (55) capable of cooperating with the blocking device to fix the primary combustion power shaft and the pump shaft in rotation.

5. Vehicle according to claim 4, **characterised in that** the blocking device comprises a dog ring gear (43) which is capable of cooperating with the dog teeth of the blocking synchronizer sleeve, the hub thereof being connected in rotation to the primary combustion power shaft.

6. Vehicle according to one of the preceding claims, **characterised in that** the mechanical transmission system of hydraulic origin comprises two clutches (21 and 22) respectively defining two hydraulic gear ratios (R1 and R2).

7. Vehicle according to one of the preceding claims, **characterised in that** the mechanical transmission system of thermal origin comprises a clutch (51) defining a combustion engine gear ratio (R).

8. Vehicle according to one of the preceding claims, **characterised in that** the mechanical transmission system of hydraulic origin comprises a secondary hydraulic shaft (23) capable of being coupled to the primary hydraulic shaft according to two gear ratios (R1 and R2) respectively defined by two clutches (21, 22); the secondary hydraulic shaft being arranged between the axis (APH) passing through the primary hydraulic shaft and the axis (ASH) passing through the secondary hydraulic shaft.

9. Vehicle according to one of the preceding claims, **characterised in that** the mechanical transmission system of thermal origin comprises a secondary combustion power shaft (33) capable of being coupled to the primary combustion power shaft according to a specific gear ratio (R) defined by a clutch (51); the secondary combustion power shaft being arranged between the axis (APT) passing through the primary combustion power shaft and the axis (AST) passing through the secondary combustion power shaft.

10. Vehicle according to one of the preceding claims, **characterised in that** the primary hydraulic shaft comprises two concentric shafts, each of the respective free ends thereof being coupled mechanically to one of the hydraulic motors.
